# EUROPEAN PATENT APPLICATION

(11) **EP 1 036 956 A2**
(43) Date of publication of application: **20.09.2000**
(21) Application number: 00301812.4
(22) Date of filing: 06.03.2000
(51) Int. Cl.: F16H 7/08

(54) **Mechanical chain tensioner**

(30) Priority: 16.03.1999 JP 6961599
(71) Applicant: Borg-Warner Automotive K. K., Nabari City, Mie-Prefecture 518-0495 (JP)
(72) Inventor: Tada, Naosumi, Nabari, Mie 518-0495 (JP)
(74) Representative: Hedges, Martin Nicholas

(57) **Abstract**

A tensioner 10 comprises a resin tensioner arm 11 and a torsional coil spring 14. The tensioner arm 11 is rotatably supported on a bolt 12 that is fixed on the engine block 30. The torsional coil spring 14 is provided around a flanged bolt 13 fixed on the engine block 30 and biases the tensioner arm 11 in such a way that the tensioner arm 11 swings toward the chain 6. On the bottom surface of a recessed portion 11a of the tensioner arm 11 is attached a metallic plate 15 that is in contact with the leg portions 14a and 14b of the torsional coil spring 14.

## Description

The present invention relates to tensioners for applying appropriate tension to chains inside engines, and specifically to an improvement to their structure.

In the timing chain systems used to drive valve equipment in internal combustion engines, a tensioner is generally situated on the slack side of the timing chain, but in chain applications where the torque fluctuation is comparatively small, such as balancer chain systems, a stationary guide has conventionally been used on the taught side of the chain as well as on the slack side. Shim adjustments are then used to adjust the degree to which the stationary guide on the chain's slack side protrudes towards the chain side, so that the chain is always subjected to the prescribed tension.

However, with the conventional configuration described above it is impossible to respond immediately should the chain become elongated and the chain's slackness increase, and consequently there is a risk of the chain rattling or of engagement malfunctioning. On the other hand, adopting hydraulic tensioners such as those found in timing chain systems presents problems such as the need for complicated hydraulic mechanisms.

The present invention was accomplished in the light of this existing situation, and has as its purpose the provision of a tensioner equipped with a simple mechanism and moreover having durability.

According to the present invention there is provided a mechanical chain tensioner which comprises a resin tensioner arm rotatable around a pivot that is fixed on the side of an engine block, and a torsional coil spring provided around a guide shaft, said guide shaft being inserted through said tensioner arm and fixed on the side of an engine block, said torsional spring biasing said tensioner arm so that said tensioner arm can rotate about said pivot towards said chain; a metallic plate being attached on the contact portion of said tensioner arm, said contact portion being in contact with a leg portion of said torsional coil spring.

A chain tensioner in accordance with the present invention has the advantage that it avoids the need for a complicated hydraulic mechanism or the like, having instead just a tensioner arm and a torsional coil spring arranged in a much simpler structure. Also, by forming the whole of the tensioner arm, including the arm itself, entirely of resin, and not just a shoe part of the tensioner arm as has been done in the past, the overall structure of the tensioner is even further simplified.

Moreover, attaching a metallic plate onto the portion of the tensioner arm against which the leg portions of the torsional coil spring press prevents the tensioner arm being worn down at contact portion through pressure from the leg portions of the torsional coil spring, thereby improving durability.

Note that the reference here to "metallic" includes alloys and intermetallic compounds in addition to simple metals.

If this metallic plate is not attached, then because the whole tensioner arm is made of resin, the contact portion of the tensioner arm is worn down through pressure from the leg portions of the torsional coil spring as this expands and contracts, and consequently the pressure applied to the chain decreases and situations can arise where it is impossible to maintain appropriate tension in the chain. The present invention deals with this by attaching a metallic plate, so that the pressure applied to the chain does not decrease and it is possible to maintain a constant level of tension in the chain at all times.

In order that the invention may be well understood, there will now be described an embodiment thereof, given by way of example, reference being made to the accompanying drawings, in which:
Figure 1 is a frontal view of a balancer chain system including a mechanical tensioner according to the present invention;
Figure 2 is a side view of the balancer chain system of Figure 1;
Figure 3 is a partial cutaway enlarged view of the tensioner of Figure 1; and
Figure 4 is a side view illustrating the operation of the tensioner of Figure 1.

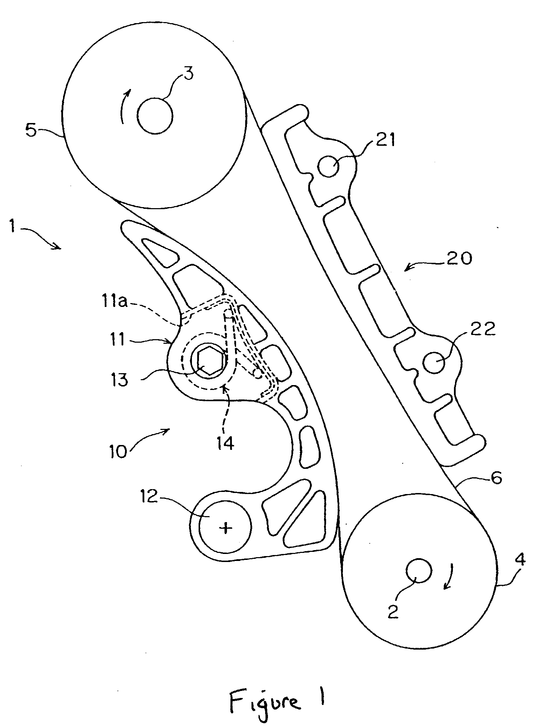

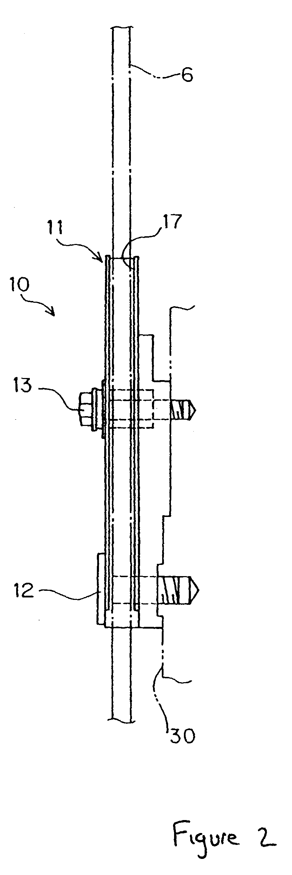

Referring first to Figures 1 and 2, there is shown a balancer chain system 1 having sprockets 4 and 5 attached to the crank shaft 2 and balance shaft 3 respectively, and a balancer chain 6 wound over and between these sprockets 4 and 5. A chain guide 20 is provided on the taught side of the balancer chain 6 and is fixed to the engine block 30 by means of the bolts 21 and 22 situated at both of its ends.

A tensioner 10 is provided on the slack side of the balancer chain 6. The tensioner 10 has a tensioner arm 11, composed of resin such as for example plastic, which is mounted so as to be freely rotatable around a bolt 12 is inserted through one end thereof and fixed to the engine block 30.

A flanged bolt 13 is inserted through a part of the tensioner 10 remote from the pad penetrated by the bolt 12. This flanged bolt 13 is also fixed to the engine block 30 in a similar manner to the bolt 12.

A recessed portion 11a is formed at the place where the flanged bolt penetrates the tensioner 10 and a torsional coil spring 14 is provided around the flanged bolt 13 within this recessed portion 11 a such that the flanged bolt 13 forms a guide shaft for the torsional coil spring 14.

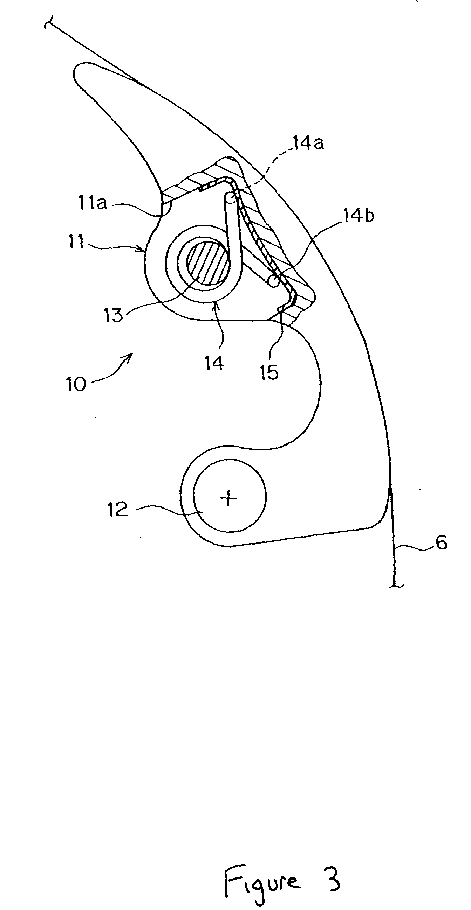

As shown in Fig. 3, a metallic plate 15 is attached to the bottom surface of the recessed portion 11a. Preferably the plate 15 is composed of tool steel, but materials of other compositions having suitable wear characteristics may also be used. The leg portions 14a and 14b at respective ends of the torsional coil spring 14 are in contact with the plate 15 and exert pressure thereon. The spring force of this torsional spring coil 14 thereby biases the tensioner arm 11 so that it rotates around the bolt 12 towards the chain 6 side.

In the tensioner 10 composed as above, the spring force of the torsional coil spring 14 acts on the tensioner arm 11 from the respective leg portions 14a and 14b via the plate 15 as described above, and this causes the tensioner arm 11 to rotate around the bolt 12 towards the chain 6 side so that a sliding surface rests against and exerts pressure on the slack side of the chain 6, the chain 6 sliding along the sliding surface 17 (Figure 2) of the tensioner arm 11 during operation.

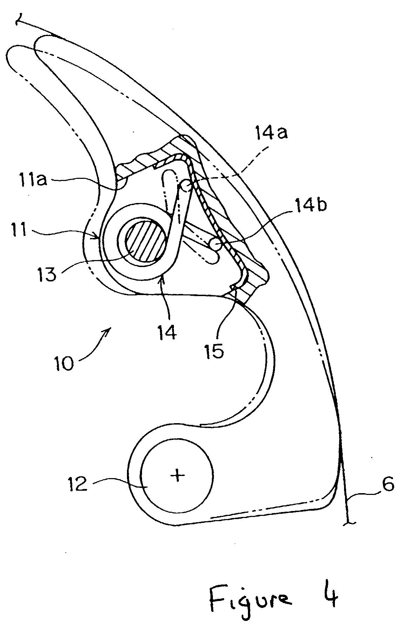

If the tension in the chain 6 decreases during operation, the positions of the respective leg portions 14a and 14b of the torsional coil spring 14 change in such a direction that the angle between the respective leg portions 14a and 14b grows smaller, as shown in Fig. 4, and consequently the tensioner arm 11 rotates around the bolt 12 towards the chain 6 side, and moves from the position shown in said drawing by a dash/double-dot line to the position marked by a solid line. As a result, even if slackness should arise in the chain 6, the aforementioned movement of the arm 11 exerts an appropriate level of pressure on the chain 6, compensating for the increase in slackness and maintaining the tension in the chain 6 at a uniform predetermined level.

Similarly, if the tension in the chain 6 increases, for example due to fluctuations in engine torque or the like, the pressure exerted by the chain 6 on the arm 13 through the sliding surface 17 increases, causing the respective leg portions 14a and 14b of the torsional coil spring 14 to move apart, i.e the angle between the respective leg portions 14a and 14b to increase, as the reverse of the situation described above, and the tensioner arm 11 hence to rotate around the bolt 12 away from the chain 6 side.

In this way, when the positions of the respective leg portions 14a and 14b of the torsional coil spring 14 change, the respective leg portions 14a and 14b move on metallic plate 15 in a state of pressured contact with plate 15. The provision of this metallic plate 15 makes it possible to prevent the bottom surface of the recessed portion 11a of the tensioner arm 11 from being worn down by the respective leg portions 14a and 14b of the torsional coil spring 14, and it is thus possible to improve the durability of the tensioner 10.

If this metallic plate 15 were not present, then because the whole tensioner arm is made of resin, the bottom surface of the recessed portion 11a of the tensioner arm 11 would be worn down through pressure from the leg portions 14a and 14b of the torsional coil spring 14 as this expands and contracts, and consequently the pressure applied to the chain 6 would decrease and situations could arise where it would be impossible to maintain appropriate tension in the chain 6. The present embodiment therefore overcomes this by including the metallic plate 15, so that the pressure applied to the chain 6 does not decrease and it is possible to maintain a constant level of tension in the chain 6 at all times.

The tensioner arm 11 and the torsional coil spring 14 of the present invention performs a similar job to and hence avoids the need for complicated hydraulic mechanism known from the prior art, thereby simplifying the structure. Also, since the hole of the tensioner arm including the arm itself is formed entirely of resin and not just a shoe part of the tensioner arm, the overall structure of the tensioner is still further simplified.

## Claims

1. A mechanical chain tensioner comprising:
a resin tensioner arm (11) rotatable around a pivot (12) fixed on the side of an engine block; and
a torsional coil spring (14) provided around a guide shaft (13), said guide shaft (13) being inserted through said tensioner arm (11) and fixed on the side of an engine block, said torsional spring (14) biasing said tensioner arm (11) to rotate about said pivot (12) toward a chain,
a metallic plate (15) being mounted on a contact portion of said tensioner arm (11), said contact portion being engaged by a leg portion of said torsional coil spring (14).
